Europäisches Patentamt

European Patent Office

Office européen des brevets

(11) Publication number: **0 109 056
B1**

# EUROPEAN PATENT SPECIFICATION

(45) Date of publication of patent specification: **27.01.88**

(21) Application number: **83111231.3**

(22) Date of filing: **10.11.83**

(51) Int. Cl.⁴: **G 01 S 15/93, B 60 Q 1/48**

(54) Rearward obstruction sensing system for automotive vehicle.

(30) Priority: **11.11.82 JP 196707/82**

(43) Date of publication of application:
**23.05.84 Bulletin 84/21**

(45) Publication of the grant of the patent:
**27.01.88 Bulletin 88/04**

(84) Designated Contracting States:
**DE FR GB**

(56) References cited:
**EP-A-0 048 958
DE-A-5 413 893
US-A-3 360 775
US-A-3 842 397
US-A-4 015 232
US-A-4 240 152**

(73) Proprietor: **NISSAN MOTOR CO., LTD.
No.2, Takara-cho, Kanagawa-ku
Yokohama-shi Kanagawa-ken 221 (JP)**

(72) Inventor: **Takeuchi, Mikio
431, Tatsunodai
Zama-shi Kanagawa-ken (JP)**

(74) Representative: **Patentanwälte TER MEER -
MÜLLER - STEINMEISTER
Mauerkircherstrasse 45
D-8000 München 80 (DE)**

Courier Press, Leamington Spa, England.

**Description**

The present invention relates generally to an obstruction sensing system for an automotive vehicle and more particularly to a rearward obstruction sensing system which can detect any obstructions existing within dead angles from the driver in order that the driver can safely back-up his vehicle into a garage, for instance.

Various obstruction sensing systems for automotive vehicles are well known. In these systems, a plurality of pairs of a transmitter and a receiver are arranged at the corners of the vehicle body in order to define each warning area near the vehicle. In the case of a rearward obstruction sensing system, usually four pairs of transmitter and receiver are arranged at both the corners of the front and rear portions of a vehicle body. When the system detects the presence of any obstructions within the predetermined warning areas, an alarm sound is produced and the warning area and the obstruction distance are both indicated on a zone display device pictorially (see JP—A—54—13893).

When backing up a vehicle, since the driver usually turns his face to the rear side of the vehicle, this zone display device is usually disposed on the rear parcel rack. Therefore, when the driver hears the alarm sound, he must watch the zone display device in order to know the direction of presence of obstructions and the distance from the vehicle to the detected obstruction. This causes a problem in that the driver cannot concentrate his attention to the backward side of the vehicle; in other words, the driver cannot recognize the direction of presence of obstructions and the distance intuitively or sensorily.

A more detailed description of the prior-art rearward obstruction sensing system for an automotive vehicle will be made with reference to the attached drawings in the detailed description of the preferred embodiments.

With these problems in mind, therefore, it is the primary object of the present invention to provide a rearward obstruction sensing system for an automotive vehicle by which the driver can recognize the direction of presence of obstructions and the obstruction distance intuitively or sensorily, without watching a warning zone display device; that is, the driver can concentrate his attention to the rear side of the vehicle at all times while backing up his vehicle into a garage, for instance.

To achieve the above-mentioned object, the rearward obstruction sensing system for an automotive vehicle according to the present invention includes a vehicle body, a passenger compartment, a gear shift lever and a car audio set and the system comprises

a plurality of means for transmitting obstruction sensing signals intermittently and sequentially, each of said transmitting means being arranged near a different one of the corners of the vehicle body;

a plurality of means for receiving the obstruction sensing signals transmitted from said transmitting means and reflected from obstructions existing within the path of said sensing signals, each of said receiving means being also arranged near a different one of said corners of the vehicle body, so as to monitor predetermined warning areas illuminated by the transmitting means;

means for controlling said transmitting means and said receiving means, said controlling means being arranged to output intermittent output command signals actuating said transmitting means intermittently and sequentially to transmit the intermittent obstruction sensing signals from said transmitting means and, moreover, to process the reflected signals sequentially received from said receiving means, said controlling means calculating obstruction distances on the basis of the difference between the time when the obstruction sensing signal is transmitted and the time when the reflected obstruction sensing signal is received and the sensing signal propagation speed, and said controlling means being further arranged to output intermittent obstruction distance signals the period of which is varied in proportion to the detected obstruction distance; and

an alarm generating device for generating in response to said intermittent obstruction distance signals an intermittent alarm sound when said controlling means detects the presence of any obstructions within any of the warning areas, and the invention is characterized in that

said alarm generating device includes a plurality of alarm generating means each of which is arranged near a different one of the corners of the passenger compartment so as to face an associated one of the warning areas as seen from the driver's position, the controlling means being arranged to supply said intermittent obstruction distance signals to predetermined ones of the alarm generating means in the associated warning areas in which an obstruction is sensed, whereby the driver is acoustically informed about the direction and the distance of an obstruction existing within dead angles from the driver without watching a display device.

Therefore, when an obstruction is detected, the speaker disposed on the side of the warning area within which the obstruction exists begins to produce an intermittent alarm sound, with the result that the driver can recognize the direction of an obstruction existing within dead angles from the driver intuitively or sensorily. Simultaneously, the driver can recognize the obstruction distance in dependence upon the period of the intermittent alarm sound.

Further, in the case where a car audio set including four speakers is equipped within the passenger compartment, it is possible to use these speakers in common by providing simple switches, without equipping any additional speakers for the sensing system.

The features and advantages of the rearward obstruction sensing system for an automotive vehicle according to the present invention over the prior-art system will be more clearly appreciated from the

2

following description taken in conjunction with the accompanying drawings in which like reference numerals designate corresponding elements or sections throughout the drawings thereof and in which:

Fig. 1 is a schematic block diagram of an example of prior-art rearward obstruction sensing systems for an automotive vehicle;

Fig. 2 is an illustration for showing an automotive vehicle equipped with the rearward obstruction sensing system shown in Fig. 1, which depicts the positions at which four pairs each of which comprises an ultrasonic signal transmitter and a receiver are arranged, and the rearward warning areas;

Fig. 3 is an illustration showing an automotive vehicle equipped with the rearward obstruction sensing system shown in Fig. 1, which depicts the position at which a zone display device is mounted;

Fig. 4 is a schematic block diagram of a first embodiment of the rearward obstruction sensing system for an automotive vehicle according to the present invention;

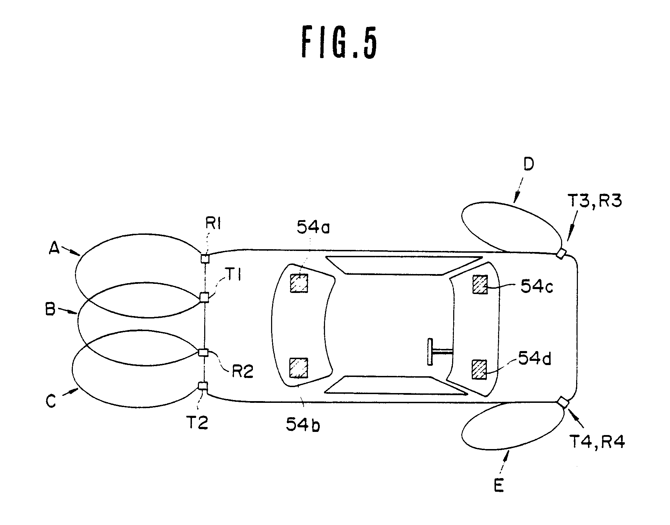

Fig. 5 is an illustration for showing an automotive vehicle equipped with the rearward obstruction sensing system shown in Fig. 4, which depicts the positions at which four pairs of ultrasonic signal transmitter and receiver, five rearward warning areas and four alarm generators are arranged;

Fig. 6 is a timing chart showing an example of intermittent alarm sound generation sequence from two alarm generators; and

Fig. 7 is a fragmentary schematic block diagram of a second embodiment of the rearward obstruction sensing system according to the present invention, in which the speakers equipped for a car audio set are used in common with the speakers for the alarm generators of the sensing system according to the present invention.

To facilitate understanding of the present invention, a reference will be made of a prior-art ultrasonic rearward obstruction sensing system for an automotive vehicle, by way of example, with reference to the attached drawings.

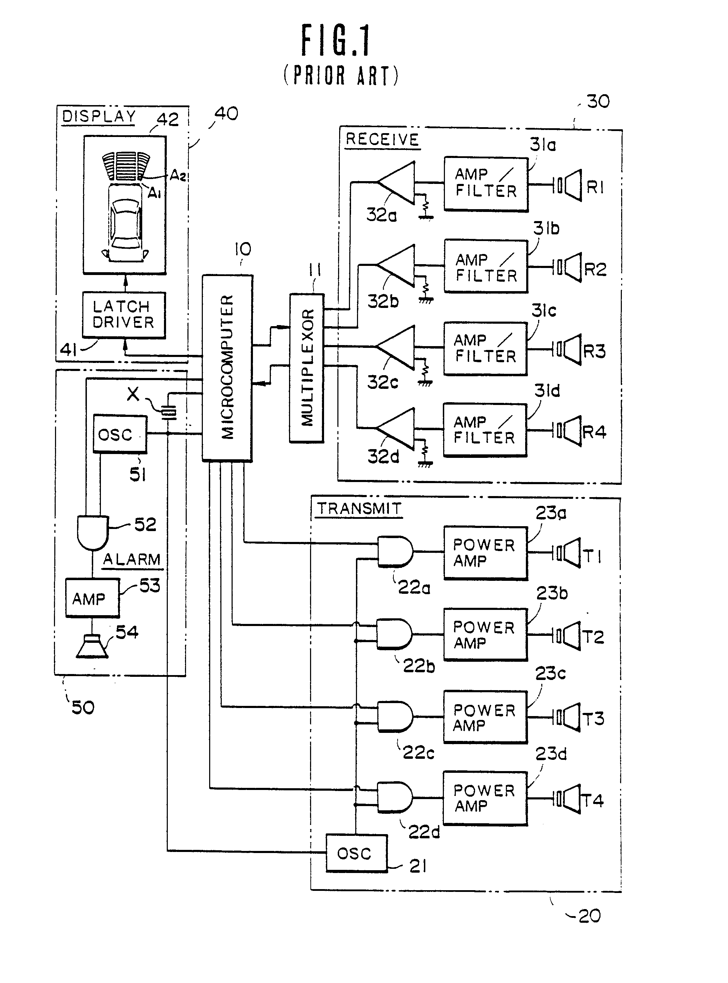

In Fig. 1, the system is roughly made up of a microcomputer 10, a multiplexor 11, an ultrasonic wave signal transmitting section 20 including four ultrasonic transmitters or transducers $T_1$, $T_2$, $T_3$ and $T_4$, an ultrasonic wave signal receiving section 30 including four ultrasonic receivers or transducers $R_1$, $R_2$, $R_3$ and $R_4$, a zone display device 40 including a latch driver 41, and an alarm generating section 50 including a speaker.

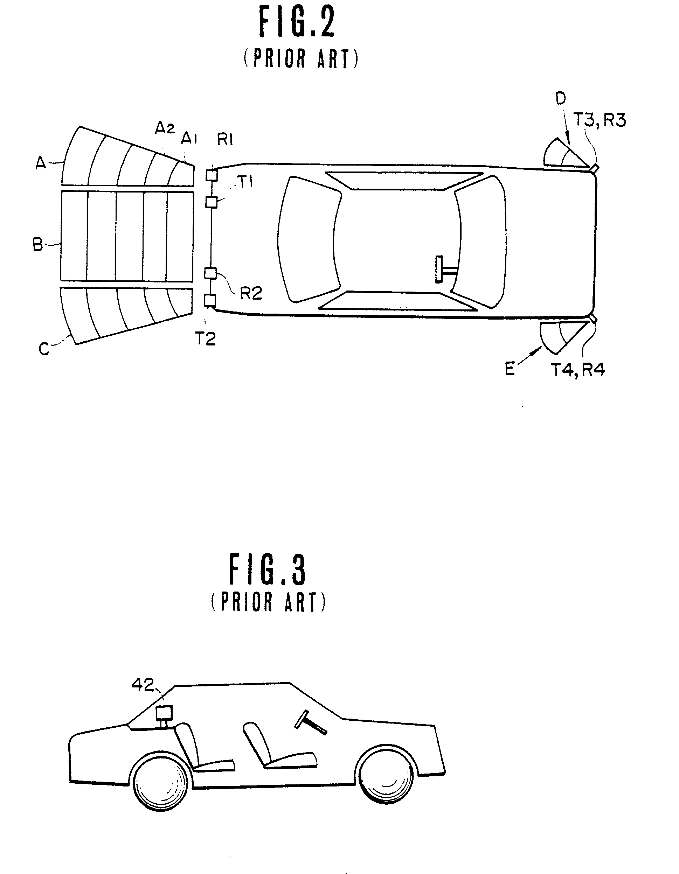

As shown in Fig. 2, a first pair of transmitter $T_1$ and receiver $R_1$ is arranged at or near the rear, left side corner of the vehicle; a second pair of transmitter $T_2$ and receiver $R_2$ is arranged at or near the rear, right side corner of the vehicle; a third pair of transmitter $T_3$ and receiver $R_3$ is arranged at the front, left side corner of the vehicle; and a fourth pair of transmitter $T_4$ and receiver $R_4$ is arranged at the front, right side corner of the vehicle. The first pair of $T_1$ and $R_1$ detects obstructions existing within a first warning area A; the second pair of $T_2$ and $R_2$ detects obstructions existing within a third warning area C; the third pair of $T_3$ and $R_3$ detects obstructions existing within a fourth warning area D; the fourth pair of $T_4$ and $R_4$ detects obstructions existing within a fifth warning area E; and the first and second pairs of $T_1$ and $R_1$ and $T_2$ and $R_2$ detect obstructions existing within a second warning area B.

The ultrasonic wave signal transmitting section 20 includes an oscillator 21 for outputting an oscillation signal in cooperation with a quartz vibrator X, four AND gates 22a, 22b, 22c and 22d, four power amplifiers 23a, 23b, 23c and 23d, and four ultrasonic wave signal transmitters (transducers) $T_1$, $T_2$, $T_3$ and $T_4$.

The microcomputer 10 outputs four intermittent output command signals separately and sequentially to one of two input terminals of the four AND gates 22a to 22d in such a way that the four signals do not overlap with each other. On the other hand, the oscillator 21 outputs an oscillation signal continuously to the other of two input terminals of four AND gates 22a to 22d simultaneously and continuously. When the command signal from the microcomputer 10 and the oscillation signal overlap with each other, the AND gates 22a to 22d output a transmission signal for a fixed time period respectively. The transmission signal from each of four AND gates 22a to 22d is amplified through each of four power amplifiers 23a, 23b, 23c and 23d to energize each of four ultrasonic transmitters (transducers) $T_1$ to $T_4$. Therefore, four transmitters $T_1$ to $T_4$ transmit an ultrasonic wave signal separately and sequentially to each of warning areas A to E.

The ultrasonic wave signal receiving section 30 includes four ultrasonic wave signal receivers (transducers) $R_1$, $R_2$, $R_3$ and $R_4$, four amplifiers/filters 31a, 31b, 31c and 31d and four voltage level comparators 32a, 32b, 32c and 32d.

In case some obstructions exist within the warning areas A to E, the receivers $R_1$ to $R_4$ receive an ultrasonic wave signal transmitted from the transmitters $T_1$ to $T_4$ and reflected by obstructions sequentially. The received ultrasonic wave signals are amplified and filtered through the four amplifiers/filters 31a to 31d respectively. The filters serve to eliminate electrical noise superimposed on the detected ultrasonic wave signal. The amplified and filtered signal levels are then compared with a predetermined level by four comparators 32a to 32d separately and sequentially. When the amplified and filtered signal levels exceed the predetermined value, the comparators 32a to 32d each output obstruction detection signals.

The microcomputer 10 outputs four intermittent input command signals separately and sequentially to the multiplexor 11 in synchronization with the four intermittent output command signals respectively. In response to these four input command signals, the multiplexor 11 inputs the obstruction detection signals to the microcomputer 10 sequentially. On the basis of these obstruction detection signals, the microcomputer 10 calculates the difference between the time when the transmitter transmits an ultrasonic signal and the time when the receiver receives the ultrasonic signal reflected from obstructions for each of

3

warning areas A to E. That is, the microcomputer 10 calculates distances to detected obstructions on the basis of these time differences and the ultrasonic wave signal propagation speed separately for each warning area. The calculated distance signal is outputted to the zone display device 40 from the microcomputer 10.

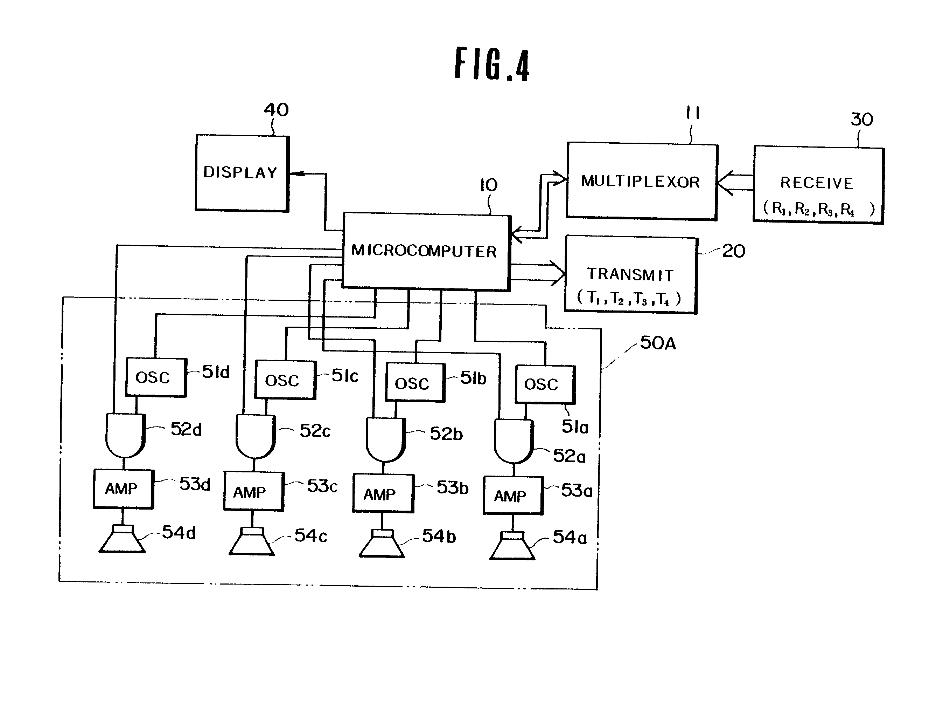

The zone display device 40 displays the detected warning area and calculated obstruction distance pictorially. Here, the term "zone" means a plurality of partitioned sector portions within each warning area on the display 42. In more detail, in case an obstruction exists within the first warning area A 0.3 m or less apart from the rear, left corner of the vehicle, the zone $A_1$ on the display 42 is illuminated; in case an obstruction exists within the same warning area A 0.3 to 0.5 m apart from the vehicle, the zone $A_2$ is illuminated, as depicted in the zone display device 42 of Fig. 1. Further, the latch driver 41 serves to keep the display zone corresponding to the detected area and calculated distance illuminated, until the detected obstruction becomes remote beyond the distance corresponding to the illuminated zone. The zone display device 42 is usually disposed on the rear parcel rack within the passenger compartment as depicted in Fig. 3. This is because when backing up the vehicle, the driver must turn his face to look up the rearward side of the vehicle for safety.

The alarm generation section 50 includes the quartz vibrator X, an oscillator 51, an AND gate 52, an amplifier 53 and a speaker 54. The output of the oscillator 51 is connected to one input terminal of the AND gate 52 to generate an alarm sound with an appropriate frequency. The microcomputer outputs to the other input terminal of the AND gate 52 an intermittent pulse signal, the period of which is proportional to the calculated obstruction distance. That is to say, the shorter the obstruction distance, the smaller the period of the intermittent alarm sound signal. Further, in the case where a plurality of obstructions are detected simultaneously, the period of the sound signal is the one corresponding to the distance to the nearest obstruction. When the intermittent pulse signal from the microcomputer 10 and the oscillation signal overlap with each other, the AND gate 52 outputs an intermittent alarm signal. The alarm signal is amplified through the amplifier 54 to produce alarm sound from the speaker 54.

In the prior-art rearward obstruction sensing system for an automotive vehicle, when the driver hears the alarm sound, he must watch the zone display device disposed within the passenger compartment in order to know the direction of the presence of obstructions and the distance to the obstruction, while paying his attention to the rear outside of the vehicle simultaneously. That is, there exists a problem in that the driver cannot recognize the direction of presence of obstructions and the obstruction distance intuitively or sensorily and therefore he cannot concentrate his attention to the backward side of the vehicle.

In view of the above description, reference is now made to a first embodiment of the rearward obstruction sensing system for an automotive vehicle according to the present invention with reference to the attached drawings.

Fig. 4 shows a schematic block diagram of the first embodiment of the rearward obstruction sensing system. In the drawing, the system is roughly made up of a microcomputer 10, a multiplexor 11, an ultrasonic wave signal transmitting section 20 including four ultrasonic transmitters $T_1$, $T_2$, $T_3$ and $T_4$, an ultrasonic wave signal receiving section 30 including four ultrasonic receivers $R_1$, $R_2$, $R_3$ and $R_4$, a zone display device 40 and an alarm generating section 50A, similarly to the prior-art system already described with reference to Fig. 1. Further, a first pair of transmitter $T_1$ and receiver $R_1$ is arranged at or near the rear, left side corner of a vehicle; a second pair of transmitter $T_2$ and receiver $R_2$ is arranged at or near the rear, right side corner of the vehicle; a third pair of transmitter $T_3$ and receiver $R_3$ is arranged at the front, left side corner of the vehicle; and a fourth pair of transmitter $T_4$ and receiver $R_4$ is arranged at the front, right side corner of the vehicle. The first pair of $T_1$ and $R_1$ detects obstructions existing within a first warning area A; the second pair of $T_2$ and $R_2$ detects obstructions existing within a third warning area C; the third pair of $T_3$ and $R_3$ detects obstructions existing within a fourth warning area D; the fourth pair of $T_4$ and $R_4$ detects obstructions existing within a fifth warning area E; and the first and second pair of $T_1$ and $R_1$ and $T_2$ and $R_2$ detect obstructions existing within a second warning area B, also in the same manner as in the prior-art system shown in Fig. 2.

An ultrasonic wave signal transmitted from each of four transmitters $T_1$ to $T_4$ independently and sequentially is reflected from obstructions existing within each of the warning areas A to E and received by each of corresponding receivers $R_1$ to $R_4$ sequentially. The microcomputer 10 calculates the difference between the time when an ultrasonic signal is transmitted from the transmitter and the time when the ultrasonic signal reflected from an obstruction is received by the receiver for each of warning areas A to E. The microcomputer 10 further calculates distances to obstructions on the basis of the calculated time differences and ultrasonic wave signal propagation speed independently for each warning area. The detected obstruction areas and the obstruction distances are indicated on the zone display device 40 in the same manner as in the prior-art sensing system.

However, the alarm generating section 50A is made up of four alarm generating subsections, being different from the alarm generating section 50 of the prior-art sensing system shown in Fig. 1. A first alarm generating subsection includes a first oscillator 51a, a first AND gate 52a, a first amplifier 53a and a first speaker 54a. Similarly, second, third, and fourth alarm generating subsections each include second, third and fourth oscillators 51b, 51c and 51d; second, third and fourth AND gates 52b, 52c and 52d; second, third

4

and fourth amplifiers 53b, 53c and 53d; and second, third and fourth speakers 54b, 54c and 54d, respectively.

The first speaker 54a is disposed at or near the rear, left side corner of the passenger compartment so as to face to the first warning area A; the second speaker 54b is disposed at or near the rear, right side corner of the passenger compartment so as to face to the third warning area C; the third speaker 54c is disposed at or near the front, left side corner of the passenger compartment so as to face to the fourth warning area D; and the fourth speaker 54d is disposed at or near the front, right side corner of the passenger compartment so as to face to the fifth warning area E when seen from the driver position. Further, it is also possible to dispose an additional speaker at the rear, middle portion of the passenger compartment so as to face to the second warning area B. However, in this embodiment shown in Fig. 4, the microcomputer is so implemented that when obstructions exist within the second warning area B, an alarm sound will be produced from the first and second speakers 54a and 54b at the same time.

The operation of the alarm generating section 50A of the rearward obstruction sensing system according to the present invention will be described hereinbelow in more detail on the basis of practical numerical values.

When any obstruction exists within the warning area A, the ultrasonic wave signal transmitted from the first transmitter $T_1$ is reflected from the obstruction and then received by the first receiver $R_1$. The received ultrasonic wave signal is amplified and filtered to eliminate the noise superimposed upon the received signal. The voltage level of the amplified and filtered signal is compared with a predetermined value. If the level exceeds the predetermined value, an obstruction detection signal is detected and applied to the microcomputer 10 from the comparator. The microcomputer 10 calculates the difference between the time when the transmitter $T_1$ transmits the ultrasonic signal and the time when the receiver $R_1$ receives the reflected ultrasonic signal. Thereafter, the microcomputer 10 calculates the obstruction distance on the basis of the calculated time difference and the ultrasonic wave propagation speed. According to the magnitude of the calculated obstruction distance, the microcomputer 10 outputs an intermittent pulse signal to the first AND gate 52a. The relationship between the obstruction distance and the period of the intermittent pulse signal is, for instance, as follows:

| Obstruction distance (m) | Period (ms) (H: high voltage level) (L: low voltage level) |
|---|---|
| 0.3 or less | Continuous |
| 0.3 to 0.5 | 100 (H: 50 ms, L: 50 ms) |
| 0.5 to 1.0 | 200 (H: 50 ms, L: 150 ms) |
| 1.0 to 1.5 | 400 (H: 50 ms, L: 350 ms) |
| 1.5 to 2.0 | 800 (H: 50 ms, L: 750 ms) |

As understood by the table above, the smaller the obstruction distance, the shorter the period of the intermittent sound signal in order to call the driver's attention to danger.

The above-mentioned intermittent pulse signal is applied to the first AND gate 52a. Since an oscillation signal is always applied to the first AND gate 52a from the first oscillator 51a, the first AND gate 52a outputs an intermittent oscillation signal only when the intermittent pulse signal indicative of obstruction distance overlaps with the continuous oscillation signal. This signal is amplified through the first amplifier 53a and applied to the first speaker 54a to produce an intermittent alarm sound. Since the first speaker 54a is disposed at the rear, left corner of the passenger compartment, when hearing the alarm sound, the driver can notice the direction of presence of obstructions intuitively or sensorily without watching the zone display 42. The driver can of course know the obstruction distance by hearing the intermittent alarm sound, because the period of the intermittence is proportional to the obstruction distance.

When any obstruction exists within the warning area B, the microcomputer 10 outputs two intermittent pulse signals the period of which is proportional to the obstruction distance to both the first and second AND gates 52a and 52b simultaneously. Therefore, the first and second speakers 54a and 54b output an intermittent alarm sound at the same time, so that the driver can notice the presence of an obstruction within the warning area B.

When any obstructions exist within the warning areas A, B and C, respectively and the distance to the obstruction existing within the warning area B is the shortest, the first and second speakers 54a and 54b produce an intermittent alarm sound simultaneously indicating that the nearest obstruction exists within the warning area B, neglecting the presence of other obstructions existing within the warning areas A and C. This is because it may be noisy to the driver and the passengers if so many kinds of intermittent alarm sounds are produced at the same time.

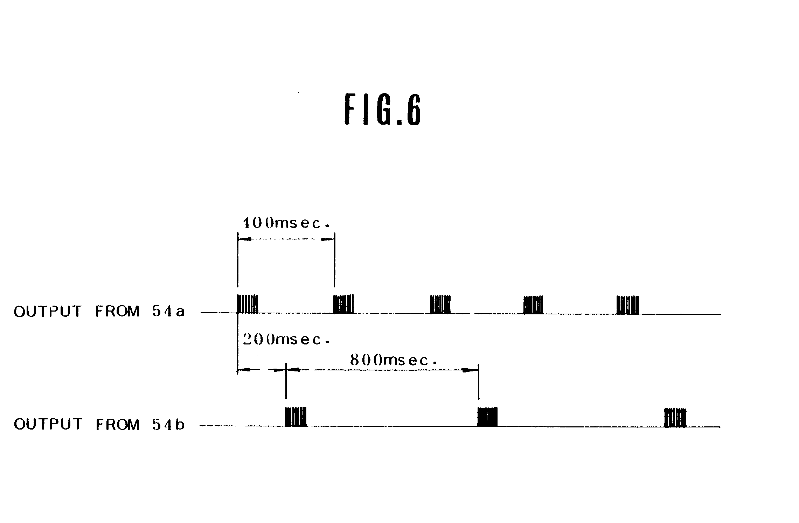

When the driver backs up his car into a garage obliquely against the wall, for instance, if the obstruction distances against the wall are 1.2 m within the area A, 1.6 m within the area B and 1.7 m within the area C, respectively, that is, when either of obstruction distances within the areas A and C is shorter than that within the area B, the microcomputer 10 neglects the area B (1.6 m) and outputs two intermittent pulse signals alternately to the first and third speakers 54a and 54c allocated to the warning areas A and C (1.2 m and 1.7 m). In more detail, the first speaker 54a produces an intermittent alarm sound with the period of 400 msec and the second speaker 54b produces an intermittent alarm sound with the period of 800 ms, alternately, as depicted in Fig. 6. Further, when any obstructions exist within the warning areas A and C at the same time, the first and second speakers 54a and 54b produce two kinds of intermittent alarm sounds with the periods corresponding to the two detected obstruction distances. Furthermore, with respect to the warning areas A, B and C, it is also possible to produce an intermittent alarm sound from only a speaker allocated to the warning area within which the nearest obstruction from the vehicle exists. In this case, however, if the nearest obstruction exists within the warning area B, two speakers 54a and 54b produce the same alarm sound simultaneously.

When any obstruction exists within the warning area D or E, the third or the fourth speaker 54c or 54d produces an intermittent alarm sound with the period corresponding to the detected obstruction distance, independently, in the same way as described above.

By the way, recently, a car audio set such as radio or cassette tape recorder for an automotive vehicle has become deluxe to such a degree that four loud speakers are provided within the passenger compartment. Usually, four speakers are arranged at each corner of the passenger compartment.

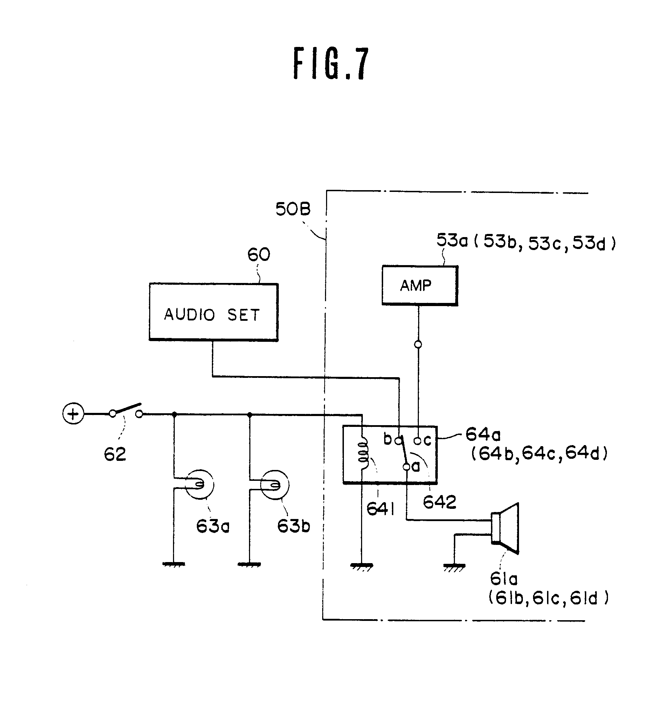

In a second embodiment of the alarm generator section 50B of the rearward obstruction sensing system according to the present invention, as shown in Fig. 7 (in which only one speaker is shown), the four speakers 54a to 54d shown in Fig. 4 are used in common with the ones 61a to 61d provided for the car audio set.

In Fig. 7, the reference numeral 60 denotes a car audio set such as radio and/or cassette tape recorder; the reference numeral 61a denotes one of four speakers used for the car audio set; reference numeral 62 denotes a gear shift lever switch which is closed when the driver sets the gear shift lever to the rear positions; and the reference numerals 63a and 63b denote two back lamps which are lit up when the driver set the gear shift lever to the rear position.

In this second embodiment, four single-pole double-throw switches 64a to 64d are additionally provided in the alarm generating section 50B. The switch 64a includes a relay coil 641 energized when the gear shift lever is set to the rear position and a relay switch 642. The movable contact $a$ of the relay switch is connected to the first speaker 61a; the first fixed contact $b$ thereof is connected to the audio set, and the second fixed contact $c$ thereof is connected to the first amplifier 53a of the alarm generator section 50B according to the present invention.

When the gear shift lever is set to positions other than rear position, since the gear shift lever switch 62 is open, the relay coil 641 is deenergized with the movable contact $a$ set to the first fixed contact $b$, so that the first speaker 61a is connected to the audio set 60 to produce audio signals. On the other hand, when the gear shift lever is set to the rear position, since the gear shift lever switch 62 is closed, the relay coil 641 is energized to bring the movable contact $a$ into contact with the second fixed contact $c$, so that the first speaker 61a is connected to the first amplifier 53a of the alarm generating section 50B to produce an intermittent alarm signal.

In this second embodiment, when the driver sets the gear shift lever to the rear position, since the audio set is automatically disabled, it is possible for the driver to collect his attention to the back side of the vehicle more carefully. Further, only the first speaker 61a and the first relay 64a are shown in Fig. 7; however, of course, four speakers (61a to 61d) and four switches 64a to 64d are necessary.

The embodiments of the rearward obstruction sensing system for an automotive vehicle according to the present invention have been described of the case where ultrasonic wave signals have been used for detecting obstructions by way of example. However, it is of course possible to apply the present invention to any other sensing systems in which other signals such as electromagnetic wave signals, optical signals, magnetic signals or other signals are used for detecting obstructions.

Further, in the second embodiment shown in Fig. 7, four separate relay 64a to 64d are used. It is of course possible to use a ganged two-way switch in which four single-pole double-throw switches are actuated by a single coil.

As described above, in the rearward obstruction sensing system for an automotive vehicle according to the present invention which detects any obstructions existing within a plurality of warning areas defined near the vehicle for each warning area and outputs an intermittent alarm signal the period of which is proportional to the obstruction distance, since a plurality of alarm generating means are arranged near the corners of the passenger compartment so as to face to the allocated warning areas, respectively, when seen from the driver, the driver can recognize the direction of obstructions existing within dead angles from the driver intuitively or sensorily, without looking up the zone display device while backing up his vehicle. Further, the driver can know the obstruction distance by distinguishing the period of the intermittent alarm sound, because the period is proportional to the obstruction distance.

**Claims**

1. A rearward obstruction sensing system for an automotive vehicle including a vehicle body, a passenger compartment, a gear shift lever and a car audio set (60), which system comprises:
(a) a plurality of means (20, $T_1$—$T_4$) for transmitting obstruction sensing signals intermittently and sequentially, each of said transmitting means being arranged near a different one of the corners of the vehicle body;

(b) a plurality of means (30, $R_1$—$R_4$) for receiving the obstruction sensing signals transmitted from said transmitting means and reflected from obstructions existing within the path of said sensing signals, each of said receiving means being also arranged near a different one of said corners of the vehicle body, so as to monitor predetermined warning areas (A—E) illuminated by the transmitting means;

(c) means (10, 11) for controlling said transmitting means and said receiving means, said controlling means being arranged to output intermittent output command signals actuating said transmitting means intermittently and sequentially to transmit the intermittent obstruction sensing signals from said transmitting means and, moreover, to process the reflected signals sequentially received from said receiving means, said controlling means claculating obstruction distances on the basis of the difference between the time when the obstruction sensing signal is transmitted and the time when the reflected obstruction sensing signal is received and the sensing signal propagation speed, and said controlling means being further arranged to output intermittent obstruction distance signals the period of which is varied in proportion to the detected obstruction distance; and

(d) an alarm generating device (50A, 50B) for generating in response to said intermittent obstruction distance signals an intermittent alarm sound when said controlling means detects the presence of any obstructions within any of the warning areas, characterized in that said alarm generating device (50A, 50B) includes a plurality of alarm generating means (54a, 54b, 54c, 54d) each of which is arranged near a different one of the corners of the passenger compartment so as to face an associated one of the warning areas as seen from the driver's position, the controlling means being arranged to supply said intermittent obstruction distance signals to predetermined ones of the alarm generating means in the associated warning areas in which an obstruction is sensed, whereby the driver is acoustically informed about the direction and the distance of an obstruction existing within dead angles from the driver without watching a display device.

2. A rearward obstruction sensing system as set forth in claim 1, characterized in that the number of said transmitting means ($T_1$, $T_2$, $T_3$, $T_4$), said receiving means ($R_1$, $R_2$, $R_3$, $R_4$) and said alarm generating means is four, a first pair of transmitting and receiving means ($T_1$, $R_1$) being disposed near the rear, left side corner of the vehicle body, a second pair of transmitting and receiving means ($T_2$, $R_2$) being disposed near the rear right side corner of the vehicle body, a third pair of transmitting and receiving means ($T_3$, $R_3$) being disposed near the front, left side corner of the vehicle body, a fourth pair of transmitting and receiving means ($T_4$, $R_4$) being disposed near the front, right side corner of the vehicle body, and a first alarm generating means (54a) being disposed near the rear, left side corner of the passenger compartment, a second alarm generating means (54b) being disposed near the rear, right side corner of the passenger compartment, a third alarm generating means (54c) being disposed near the front left side corner of the passenger compartment, and a fourth alarm generating means (54d) being disposed near the front, right side corner of the passenger compartment.

3. A rearward obstruction sensing system as set forth in claim 2, characterized in that said first transmitting means ($T_1$), said first receiving means ($R_1$) and said first alarm generating means (54a) are arranged to monitor a first warning area (A) defined near the rear, left side of the vehicle body, said first and second transmitting means ($T_1$, $T_2$), said first and second receiving means ($R_1$, $R_2$) and said first and second alarm generating means (54a, 54b) are arranged to monitor a second warning area (B) defined near the rear, middle portion of the vehicle body, said second transmitting means ($T_2$), said second receiving means ($R_2$) and said second alarm generating means (54b) are arranged to monitor a third warning area (C) defined near the rear, right side of the vehicle body, said third transmitting means ($T_3$), said third receiving means ($R_3$) and said third alarm generating means (54c) are arranged to monitor a fourth warning area (D) defined near the front, left side of the vehicle body, and said fourth transmitting means ($T_4$), said fourth receiving means ($R_4$) and said fourth alarm generating means (54d) are arranged to monitor a fifth warning area (E) defined near the front, right side of the vehicle body.

4. A rearward obstruction sensing system as set forth in claim 2, characterized in that each of said four alarm generating means comprises respectively:

(a) an oscillator (51a, 51b, 51c, 51d) for outputting an oscillation alarm signal continuously;

(b) an AND gate (52a, 52b, 52c, 52d) responsive to said controlling means and said oscillator for ANDing the oscillation alarm signal and the intermittent obstruction distance signal; and

(c) a speaker (54a, 54b, 54c, 54d) responsive to the output from said AND gate for producing intermittently oscillating alarm signals at intervals proportional to the detected obstruction distance.

5. A rearward obstruction sensing system as set forth in claim 2, characterized in that each of said four alarm generating means comprises respectively:

(a) an oscillator (51a, 51b, 51c, 51d) for outputting an oscillation alarm signal continuously;

(b) an AND gate (52a, 52b, 52c, 52d) responsive to said controlling means and said oscillator for ANDing the oscillation alarm signal and the intermittent obstruction distance signal;

(c) a speaker (61a, 61b, 61c, 61d) used for the car audio set (60) within the passenger compartment; and

(d) a switch (64a, 64b, 64c, 64d) for connecting said AND gate to said speaker for producing intermittent alarm signals at intervals proportional to the detected obstruction distance, when the gear shift lever is in reverse and for connecting the car audio set to said speaker for producing audio signals when the gear shift lever is other than in reverse, whereby the speakers for the car audio set are used to generate said alarm sound.

**Patentansprüche**

1. Vorrichtung zur Feststellung von Hindernissen beim Zurücksetzen eines Fahrzeuges mit einer Karosserie, einem Insassenabteil, einem Gangschaltungshebel und einer NF-Verstärkeranlage (60), die folgende Teile enthält:

(a) eine Mehrzahl von Vorrichtungen (20, $T_1$—$T_4$), die in der Nähe verschiedener Ecken der Karosserie zum Senden einer Folge von unterbrochenen Signalen zur Feststellung von Hindernissen;

(b) eine Mehrzahl von Vorrichtungen (30, $R_1$—$R_4$), die ebenfalls nahe verschiedener Ecken der Karosserie angeordnet sind zum Empfang der von den Sendeeinrichtungen ausgesandten und an im Ausbreitungsweg befindlichen Hindernissen reflektierten Signale, so daß bestimmte, von den Sendeeinrichtungen bestrahlte Warnbereiche (A—E) überwacht werden;

(c) Vorrichtungen (10, 11) zur Steuerung der Sende- und Empfangseinrichtungen, wobei die Steuervorrichtungen so ausgelegt sind, daß ein unterbrochene Befehlssignale abgeben, die die Sendeeinrichtung intermittierend und sequentiall aktivieren, so daß unterbrochene Signale zur Erfassung von Hindernissen von den Sendeeinrichtungen ausgestrahlt werden, und, darüber hinaus zur Verarbeitung der sequentiell von den Empfangseinrichtungen empfangenen reflektierten Signale, wobei die Steuervorrichtungen aufgrund der Zeitdifferenz zwischen dem Abstrahlen des Signales, dem Empfang des an einem Hindernis reflektierten Signales und der Ausbreitungsgeschwindigkeit dieses Signales den Abstand zu einem Hindernis berechnen und außerdem so ausgelegt sind, daß sie intermittierte Abstandssignale abgeben, deren Periode sich im Verhältnis zu dem gemessenen Hindernisabstand verändert; und

(d) eine Vorrichtung zur Alarmerzeugung (50A, 50B) zur Erzeugung eines unterbrochenen Alarmsignales in Abhängigkeit des unterbrochenen Hindernisabstandssignales, wenn die Steuervorrichtungen das Vorhandensein von Hindernissen innerhalb eines Warnbereiches erfassen; dadurch gekennzeichnet, daß die Alarmierungsvorrichtung (50A, 50B) eine Mehrzahl von alarmerzeugenden Vorrichtungen (54a, 54b, 54c, 54d) aufweist, die jeweils in der Nähe verschiedener Ecken des Insassenabteiles angebracht sind, so daß sie von der Fahrerposition aus gesehen jeweils einem zugeordneten Warnbereich gegenüberliegen, und die Steuervorrichtung so ausgelegt sind, daß sie die unterbrochenen Hindernis-Abstandssignale bestimmten, alarmerzeugenden Vorrichtungen zuleiten, die den Warnbereichen zugeordnet sind, in denen ein Hindernis erfaßt wurde, wodurch der Fahrer akustisch über die Richtung und den Abstand von Hindernissen innerhalb des toten Bereiches des Fahrers informiert wird, ohne eine Anzeigeeinrichtung betrachten zu müssen.

2. Vorrichtung nach Anspruch 1, dadurch gekennzeichnet, daß die Anzahl der Sendevorrichtungen ($T_1$, $T_2$, $T_3$, $T_4$), der Empfangsvorrichtungen ($R_1$, $R_2$, $R_3$, $R_4$) und der alarmerzeugenden Vorrichtungen vier beträgt, daß ein erstes Paar aus Sende- und Empfangsvorrichtungen ($T_1$, $R_2$) nahe der rückwärtigen linken Ecke der Karosserie, ein zweites Paar aus Sende- und Empfangsvorrichtungen ($T_2$, $R_2$) nahe der rückwärtigen rechten Ecke der Karosserie, ein drittes Paar aus Sende- und Empfangsvorrichtungen ($T_3$, $R_3$) nahe der vorderen linken Ecke der Karosserie, ein viertes Paar aus Sende- und Empfangsvorrichtungen ($T_4$, $R_4$) nahe der vorderen rechten Ecke der Karosserie, sowie eine erste alarmerzeugende Vorrichtung (54a) nahe der rückwärtigen linken Ecke des Insassenabteiles, eine zweite alarmerzeugende Vorrichtung (54b) nahe der rückwärtigen rechten Ecke des Insassenabteiles, eine dritte alarmerzeugende Vorrichtung (54c) nahe der vorderen linken Ecke des Insassenabteiles und eine vierte alarmerzeugende Vorrichtung (54d) nahe der vorderen rechten Ecke des Insassenabteiles angeordnet ist.

3. Vorrichtung nach Anspruch 2, dadurch gekennzeichnet, daß die erste Sendeeinerichtung ($T_1$), die erste Empfangseinrichtung ($R_1$) und die erste alarmerzeugende Vorrichtung (54a) so angeordnet sind, daß sie einen ersten Warnbereich (A) nahe der rückwärtigen linken Ecke der Karosserie überwachen, daß die ersten und zweiten Sendeeinrichtungen ($T_1$, $T_2$), die ersten und zweiten Empfangseinrichtungen ($R_1$, $R_2$) und die ersten und zweiten alarmerzeugenden Vorrichtungen (54a, 54b) so angeordnet sind, daß sie einen zweiten Warnbereich (B) nahe dem rückwärtigen mittleren Teil der Karosserie überwachen, daß die zweite Sendeeinrichtung ($T_2$) die zweite Empfangseinrichtung ($R_2$) und die zweite alarmerzeugende Vorrichtung (54b) so angeordnet sind, daß sie einen dritten Warnbereich (C) nahe der rückwärtigen rechten Ecke der Karosserie überwachen, daß die dritte Sendeeinrichtung ($T_3$), die dritte Empfangseinrichtung ($R_3$) und die dritte alarmerzeugende Vorrichtung (54c) so angeordnet sind, daß sie einen vierten Warnbereich (D) nahe der vorderen linken Seite der Karosserie überwachen, und daß die vierte Sendeeinrichtung ($T_4$), die vierte Empfangseinrichtung ($R_4$) und die vierte alarmerzeugende Vorrichtung (54d) so angeordnet sind, daß sie einen fünften Warnbereich (E) nahe der vorderen rechten Seite der Karosserie überwachen.

4. Vorrichtung nach Anspruch 2, dadurch gekennzeichnet, daß jede der vier alarmerzeugenden Vorrichtungen jeweils enthält:

(a) einen Oszillator (51a, 51b, 51c, 51d) zur kontinuierlichen Abgabe eines oszillierenden Alarmsignales;

(b) ein UND-Gatter (52a, 52b, 52c, 52d), das auf die Steuervorrichtungen und den Oszillator zur

**0 109 056**

UND-Verknüpfung des Oszillator-Alarmsignales und des unterbrochenen Hindernis-Abstandssignales anspricht; und

(c) einen Lautsprecher (54a, 54b, 54c, 54d), der auf das Ausgangssignal des UND-Gatters zur Erzeugung von unterbrochenen oszillierenden Alarmsignalen in Intervallen, die proportional zum Abstand des erfaßten Hindernisses sind, anspricht.

5. Vorrichtung nach Anspruch 2, dadurch gekennzeichnet, daß jede der vier alarmerzeugenden Vorrichtungen folgende Teile enthält:

(a) einen Oszillator (51a, 51b, 51c, 51d) zur kontinuierlichen Abgabe eines oszillierenden Alarmsignales;

(b) ein UND-Gatter (52a, 52b, 52c, 52d), das auf die Steuervorrichtung und den Oszillator zur UND-Verknüpfung des Oszillator-Alarmsignales und des unterbrochenen Hindernis-Abstandssignales anspricht;

(c) einen Lautsprecher (61a, 61b, 61c, 61d) innerhalb des Fahrgastraumes, der in Verbindung mit der NF-Verstärkeranlage (60) des Autos verwendet wird, und

(d) einen Schalter (64a, 64b, 64c, 64d) zur Verbindung des UND-Gatters mit dem Lautsprecher zur Erzeugung eines unterbrochenen Alarmsignales in Intervallen, die proportional zum Abstand des erfaßten Hindernisses sind, wenn der Gangschaltungshebel in den Rückwärtsgang eingelegt ist, und zur Verbindung der NF-Verstärkeranlage des Autos mit dem Lautsprecher zur Erzeugung von Audiosignalen, wenn sich der Gangschaltungshebel nicht im Rückwärtsgang befindet, wodurch die Lautsprecher für die NV-Verstärkeranlage des Autos auch zur Erzeugung des Alarmsignales verwendbar sind.

**Revendications**

1. Système de détection d'obstacles arrière pour un véhicule automobile comprenant un châssis de véhicule, un compartiment de passagers, un levier de changement de vitesse et un équipement audio (60) d'automobile, lequel système comprend:

(a) un certain nombre de moyens (20, $T_1$—$T_4$) pour transmette des signaux de détection de l'obstacle de façon intermittente et séquentiellement, chacun desdits moyens de transmission étant agencé près des différents coins du châssis du véhicule;

(b) un certain nombre de moyens (30, $R_1$—$R_4$) pour recevoir les signaux de détection d'obstacles transmis dudit moyen de transmission et réfléchis des obstacles existant dans le trajet desdits signaux de détection, chacun desdits moyens de réception étant également agencé près des différents coins du châssis du véhicule, afin de contrôler des zones d'alarme prédéterminées (A—E) illuminées par le moyen de transmission;

(c) un moyen (10, 11) pour contrôler lesdits moyens de transmission et de réception, ledit moyen de contrôle étant agencé pour émettre des signaux de commande de sortie intermittents actionnant ledit moyen de transmission de façon intermittente et séquentiellement pour transmettre les signaux de détection de l'obstacle intermittents dudit moyen de transmission et, de plus, pour traiter les signaux réfléchis séquentiellement reçus dudit moyen de réception, ledit moyen de contrôle calculant les distances des obstacles sur la base de la différence entre le temps où le signal de détection de l'obstacle est transmis et le temps où le signal de détection de l'obstacle est reçu et la vitesse de propagation du signal de détection, et ledit moyen de contrôle étant également agencé pour émettre des signaux de distance d'obstacles intermittente dont la période varie en proportion à la distance détectée des obstacles; et

(d) un dispositif de production d'alarme (50A, 50B) pour produire en réponse auxdits signaux de distance des obstacles intermittants un son d'alarme intermittent lorsque ledit moyen de contrôle détecte la présence d'obstacles dans les zones d'alarme, caractérisé en ce que le dispositif de production d'alarme (50A, 50B) comprend un certain nombre de moyens de production d'alarme (54a, 54b, 54c, 54d) dont chacun est agencé près des différents coins du compartiment des passagers afin de faire face aux zones associées d'alarme comme vues de la position du conducteur, le moyen de contrôle étant agencé pour appliquer lesdits signaux de distance des obstacles intermittents aux moyens de production d'alarme prédéterminés dans les zones d'alarme associées dans lesquelles un obstacle est détecté, ainsi le conducteur est acoustiquement informé de la direction et de la distance d'un obstacle existant dans les angles morts du conducteur sans regarder un dispositif de visualisation.

2. Système de détection d'obstacles arrière selon la revendication 1, caractérisé en ce que le nombre des moyens de transmission précités ($T_1$, $T_2$, $T_3$, $T_4$), des moyens de réception précités ($R_1$, $R_2$, $R_3$, $R_4$) et des moyens de production d'alarme précités est de quatre, une première paire de moyens de transmission et de réception ($T_1$, $R_1$) étant disposée près du coin latéral gauche arrière du châssis du véhicle, une seconde paire de moyens de transmission et de réception ($T_2$, $R_2$) étant disposée près du coin latéral droite arrière du châssis du véhicule, une troisième paire de moyens de transmission et de réception ($T_3$, $R_3$) étant disposée près du coin latéral gauche avant du châssis du véhicule, une quatrième paire de moyens de transmission et de réception ($T_4$, $R_4$) étant disposée près du coin latéral droite avant du châssis du véhicule, et un premier moyen de production d'alarme (54a) étant disposé près du coin latéral gauche arrière du compartiment des passagers, un second moyen de production d'alarme (54b) étant disposé près du coin latéral droite arrière du compartiment des passagers, un troisième moyen de production d'alarme (54c)

9

# 0 109 056

étant disposé près du coin latéral gauche avant du compartiment des passagers, un quatrième moyen de production d'alarme (54d) étant disposé près du coin latéral droite avant du compartiment des passagers.

3. Système de détection d'obstacles arrière selon la revendication 2, caractérisé en ce que le premier moyen de transmission précité ($T_1$), le premier moyen de réception précité ($R_1$) et le premier moyen de production d'alarme précité (54a) sont agencés pour contrôler une première zone d'alarme (A) définie près du côté latéral arrière du châssis du véhicule, les premier et second moyens de transmission précités ($T_1$, $T_2$), les premier et second moyens de réception précités ($R_1$, $R_2$) et les premier et second moyens de production d'alarme précités (54a, 54b) sont agencés pour contrôler une seconde zone d'alarme (B) définie près de la portion médiane arrière du châssis du véhicule, ledit second moyen de transmission ($T_2$), ledit second moyen de réception ($R_2$) et ledit second moyen de production d'alarme (54b) sont agencés pour contrôler une troisième zone d'alarme (C) définie près du côté droit arrière du châssis du véhicule, le troisième moyen de transmission précité ($T_3$), le troisième moyen de réception précité ($R_3$) et le troisième moyen de production d'alarme précité (54c) sont agencés pour contrôler une quatrième zone d'alarme (D) définie près du côté gauche avant du châssis du véhicule, et le quatrième moyen de transmission précité ($T_4$), le quatrième moyen de réception précité ($R_4$) et le quatrième moyen de production d'alarme précité (54d) sont agencés pour contrôler une cinquième zone d'alarme (E) définie près du côté droit avant du châssis du véhicule.

4. Système de détection d'obstacles arrière selon la revendication 2, caractérisé en ce que chacun des quatre moyens de production d'alarme précités comprend respectivement:

(a) un oscillateur (51a, 51b, 51c, 51d) pour émettre continuellement un signal d'alarme d'oscillation;

(b) une porte ET (52a, 52b, 52c, 52d) répondant au moyen de contrôle précité et audit oscillateur pour recevoir le signal d'alarme d'oscillation et le signal de distance intermittent de l'obstacle; et

(c) un haut-parleur (54a, 54b, 54c, 54d) répondant à la sortie de ladite porte ET pour produire des signaux d'alarme oscillants de façon intermittente à des intervalles proportionnels à la distance détectée de l'obstacle.

5. Système de détection d'obstacles arrière selon la revendication 2, caractérisé en ce que chacun des quatre moyens de production d'alarme précités comprend respectivement:

(a) un oscillateur (51a, 51b, 51c, 51d) pour émettre continuellement un signal d'alarme d'oscillation;

(b) une porte ET (52a, 52b, 52c, 52d) répondant au moyen de contrôle précité et audit oscillateur pour recevoir le signal d'alarme d'oscillation et le signal de distance intermittent de l'obstacle;

(c) un haut-parleur (61a, 61b, 61c, 61d) utilisé pour l'équipement audio d'automobile (60) dans le compartiment des passagers; et

(d) un commutateur (64a, 64b, 64c, 64d) pour relier ladite porte ET audit haut-parleur pour produire des signaux d'alarme intermittents à des intervalles proportionnels à la distance détectée de l'obstacle, lorsque le levier de changement de vitesse est en arrière et pour relier l'équipement audio de l'automobile audit haut-parleur pour produire de signaux audio lorsque le levier de changement de vitesse est en position autre que la position arrière, ainsi les haut-parleurs de l'équipement audio de l'automobile sont utilisés pour produire ledit son d'alarme.

# FIG.1
## (PRIOR ART)

# FIG.2

# FIG.3

# FIG.4

DISPLAY — 40

MICROCOMPUTER — 10

MULTIPLEXOR — 11

RECEIVE ($R_1, R_2, R_3, R_4$) — 30

TRANSMIT ($T_1, T_2, T_3, T_4$) — 20

50A

OSC — 5Id
OSC — 5Ic
OSC — 5Ib
OSC — 5Ia

52d
52c
52b
52a

AMP — 53d
AMP — 53c
AMP — 53b
AMP — 53a

54d
54c
54b
54a

0 109 056

0 109 056

# FIG.5

4

FIG.6

OUTPUT FROM 54a

100msec.

200msec.

800msec.

OUTPUT FROM 54b

0 109 056

# FIG.7